# EUROPÄISCHE PATENTANMELDUNG

(11) **EP 1 715 213 A1**
(43) Veröffentlichungstag der Anmeldung: **25.10.2006**
(21) Anmeldenummer: 06004432.8
(22) Anmeldetag: 04.03.2006
(51) Int. Cl.: F16F 9/05

(54) **Luftfederdämpfung**

(30) Priorität: 20.04.2005 DE 102005018131
(71) Anmelder: Carl Freudenberg KG, 69469 Weinheim (DE)
(72) Erfinder: Müller, Jan, 22305 Hamburg (DE); Branco, Antonio, 21244 Buchholz (DE)

(57) **Zusammenfassung**

Luftfederdämpfer mit zwei durch einen Kolben getrennte Arbeitskammern, die über im Kolbenboden eingefügte Durchlassöffnungen miteinander kommunizieren, wobei der Kolben (7) in einem zylindrischen, durch Deckel (5) und Boden (6) abgeschlossenen Gehäuse (4), untergebracht ist und eine zylindrische Außenwandung (10) hat, die mit Abstand zur Innenwandung (12) des Gehäuses (4) angeordnet ist, und dass zwischen dem Kolben (7) und dem Gehäuse (4) zwei mit ihren Rollfalten (15,16) entgegengerichtete Rollbälge (13, 14) eingefügt sind.

## Beschreibung

### Technisches Gebiet

Für Zwecke der Federung und Dämpfung insbesondere an Kraftfahrzeugen werden Luftfederdämpfer eingesetzt, die ausschließlich mit einem Gas, vorzugsweise Luft, gefüllt sind. Vorrichtungen dieser Art ergeben einen hohen Fahrkomfort. Dabei kommen Dämpfer mit nur einem Gasraum oder auch mehreren Gasräumen zum Einsatz.

### Stand der Technik

Durch die DE 196 42 024 A1 ist eine Rollbalg-Gasfeder bekannt, die nur einen mit Gas gefüllten Arbeitsraum aufweist. Dieser ist durch einen Rollbalg abgeschlossen. Als Rollwand für den Rollbalg dient ein topfförmiges Außenstützteil.

Eine Luftfeder mit zwei Arbeitskammern zeigt die DE 34 36 664 C2. Die Arbeitskammern werden von in ihren Abmessungen unterschiedlich dimensionierten Gehäusen und Kolben sowie an diesen befestigten Rollbälgen begrenzt. Die Kolben sind an einer Kolbenstange gehalten, die mittig von einer die beiden Kammern trennenden Wand gehalten und geführt ist. In der Trennwand sind Drosselöffnungen vorgesehen, die einen Luftaustausch zwischen den beiden Arbeitskammern ermöglichen und die durch ihre veränderbare Dimensionierung die Dämpfungs- bzw. Federungseigenschaften der Luftfeder mitbestimmen.

Eine weitere Möglichkeit der Ausbildung einer Luftfeder mit zwei Arbeitskammern zeigt die DE 103 11 263 B3. Hier werden zwei Gehäuseteile ineinander verschoben, wobei der größere Gehäuseteil mit einem in die zweite Arbeitskammer hineinreichenden Abrollrohr versehen ist. Zwischen den Wänden der beiden Gehäuse ist ein Rollbalg eingefügt, sodass die Innenwand des größeren Gehäuses und die Außenwand des kleineren Gehäuses als Abrollflächen für den eingesetzten Rollbalg benutzt werden. Zwischen dem Abrollrohr und den Wänden des kleineren Gehäuses sind zwei mit Ihren Rollfalten gegenläufig ausgerichtete Rollbälge eingesetzt, bei denen die Abrollflächen durch die Außenwand des Abrollrohres und die Innenwand des kleineren Gehäuses gebildet sind.

### Darstellung der Erfindung

Der Erfindung liegt die Aufgabe zugrunde einen Luftfederdämpfer zu schaffen, der in seinem konstruktiven Aufbau einfach gehalten ist und eine möglichst kompakte Bauweise hat. Es soll eine gute Dämpfung und Federung erreicht werden. Eventuelle Geräusche sollen weitgehend vermieden werden.

Die Lösung der gestellten Aufgabe wird mit den Merkmalen des Anspruchs 1 erreicht. Der Luftfederdämpfer wird mit zwei Arbeitskammern versehen, die über im Kolbenboden eingefügte Durchlassöffnungen miteinander kommunizieren. Der Kolben selbst wird in einem zylindrischen durch Deckel und Boden abgeschlossenen Gehäuse untergebracht und mit einer zylindrischen Außenwandung versehen, die mit Abstand zur Innenwandung des Gehäuses angeordnet ist. Zwischen dem Kolben und dem Gehäuse werden zwei mit ihren Rollfalten entgegengerichtete Rollbälge eingefügt. Die Kolbenstange wird im Gehäuseboden geführt. Auf diese Weise werden zwei Arbeitskammern geschaffen, wobei die die Arbeitskammern abschließenden Rollbälge sich faltenseitig gegenüber stehen. Durch die Bewegung des Kolbens wird jeweils der eine Luftraum komprimiert und der andere dekomprimiert. Durch die im Kolbenboden eingefügten Durchlassöffnungen wird die Luft von einem Arbeitsraum in den anderen Arbeitsraum gedrückt. Hierdurch wird eine Dämpfung erreicht, die von der konstruktiven Ausbildung der Durchlassöffnungen bestimmt wird. Die Durchlassöffnungen können als Drosselöffnungen oder auch als Ventile ausgebildet sein. Durch den Einsatz der Rollbälge als Dichtungssystem zwischen dem Gehäuse und dem Kolben werden die Geräusche, wie sie beispielsweise bei Reibdichtungssystemen entstehen, vermieden. Die Ausbildung des Kolbens und seine Anordnung im Gehäuse ist derart, dass die Außenwandung des Kolbens und die Innenwandung des Gehäuses die Abrollflächen für die Rollbälge bilden. Dabei ist es günstig, wenn der Kolben etwa mittig im Gehäuse angeordnet ist und auf diese Weise zwei etwa gleich groß Arbeitsräume voneinander trennt. Der Deckel und der Boden des Gehäuses werden bevorzugt mit konusförmigen in das Gehäuse hineinragenden Ansätzen versehen, an welche die axial nach außen gerichteten Enden der Rollbälge angeschlossen werden können. Auf diese Weise werden die Enden der Rollbälge als Abdichtmittel am Deckel beziehungsweise Boden des Gehäuses mit einbezogen. Eine solche Ausbildung ist besonders vorteilhaft, wenn die Rollbälge mit den entgegengerichteten Rollfalten und den an Deckel und Boden angeschlossenen Enden einer gleichen Arbeitskammer aus einem Einzelstück bestehen. Es wird folglich für jede Arbeitskammer nur ein Rollbalg verwendet, bei dem ein Ende am Kolben angebracht ist und das andere Ende am Deckel beziehungsweise Boden des Gehäuses. Die Rollbewegung der Rollfalten der Rollbälge findet im Bereich der Kolbenwand statt. Während die anderen Enden der Rollbälge am Deckel beziehungsweise am Boden des Gehäuses festgehalten werden. Das schlauchförmige Mittelteil des jeweiligen Rollbalgs liegt an der Innenwandung des Gehäuses an.

In weiterer Ausgestaltung der Erfindung kann am Gehäuseboden eine Luftfederkammer angeschlossen sein, die von einem dritten zusätzlichen Rollbalg eingefasst ist. Die Rollfläche dieses Rollbalgs wird durch einen mit der Kolbenstange verbundenen weiteren Rollkolben gebildet. Die Befestigung dieses Rollbalgs am Gehäuseboden kann in gleicher Weise wie oben geschildert erfolgen. Ebenso seine Befestigung am Rollkolben. Das Federungsverhalten der Luftfederkammer kann durch wenigstens einen Durchlass im Boden des Gehäuses gesteuert werden, indem der Durchlass mit einer veränderbaren Öffnung ausgeführt wird.

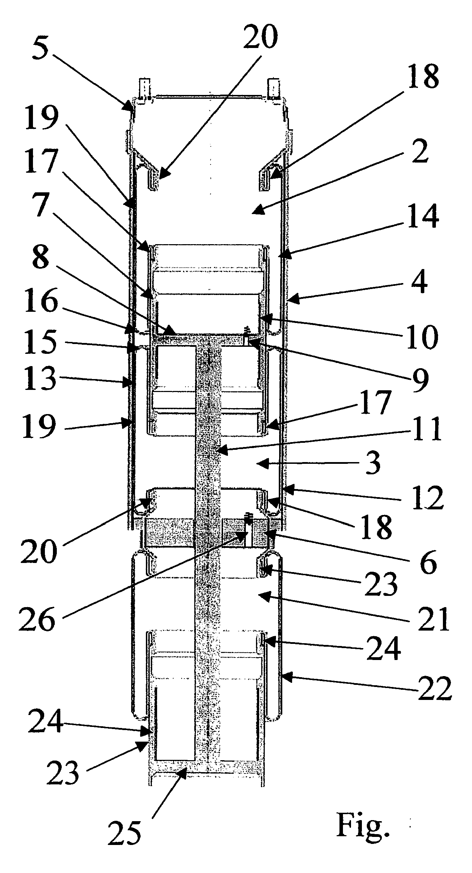

### Kurzbeschreibung der Zeichnung

Anhand eines Ausführungsbeispiels wird die Erfindung nachstehend näher erläutert. Die beiliegende Figur zeigt einen Längsschnitt durch den Luftfederdämpfer mit seinem prinzipiellen Aufbau.

### Ausführung der Erfindung

Bei dem in der Figur im Schnitt dargestellten Luftfederdämpfer 1 sind die beiden Arbeitskammern 2 und 3 vorhanden, die im Wesentlichen eine Dämpferfunktion übernehmen. Die Arbeitskammern 2 und 3 werden von dem zylindrischen Gehäuse 4 eingefasst, das von dem topfförmig ausgebildeten Deckel 5 und dem Boden 6 abgeschlossen ist. Beide Arbeitskammern werden durch den Kolben 7 voneinander getrennt. Sie stehen jedoch über die im Kolbenboden 8 eingefügte Durchlassöffnung 9 miteinander in Verbindung. Der Kolben 7 ist doppelseitig ausgebildet und somit axial in beiden Richtungen wirksam. Die zylindrische Kolbenwandung 10 ist symmetrisch zum Kolbenboden 8, sodass gewissermaßen ein Doppelkolben vorhanden ist. Die Kolbenstange 11 wird durch den Gehäuseboden 6 nach außen geführt. Die zylindrische Außenwandung 10 des Kolbens 7 ist mit Abstand zur Innenwandung 12 des Gehäuses 4 angeordnet, sodass zwischen dem Kolben 7 und dem Gehäuse 4 die Rollbälge 13 und 14 eingesetzt werden können. Die Rollbälge 13 und 14 sind mit ihren Rollfalten 15 und 16 entgegengerichtet. Die Enden der schlauchförmigen Rollbälge werden am Kolben 7 und am Gehäuse 4 normalerweise befestigt und die Abrollfächen für die Rollbälge 13 und 14 von der Außenwandung 10 des Kolbens 7 und der Innenwandung 12 des Gehäuses 4 gebildet. Im vorliegenden Ausführungsbeispiel ist eine besonders günstige Ausgestaltung der Rollbälge 13 und 14 und ihre Befestigung am Kolben beziehungsweise Gehäuse gewählt worden. Die Rollbälge 13 und 14 bestehen jeweils aus einem Einzelstück und ihre Enden 17 beziehungsweise 18 werden mit dem Kolben 7 beziehungsweise dem Deckel 5 beziehungsweise dem Boden 6 des Gehäuses 4 verbunden. Die Mittelteile 19 der Rollbälge 13 und 14 liegen an der Innenwandung 12 des Gehäuses 4 an. Diese Ausbildung der Rollbälge und ihre Anbringung am Kolben 7 und Deckel 5 sowie Boden 6 ergibt eine besonders günstige Anordnung, die ein hohes Dichtvermögen, eine einfache Montage und auch die Vermeidung von Geräuschen ergibt. Für die besonders günstige Befestigung der Enden 18 der Rollbälge 13, 14 sind der Deckel 5 und der Boden 6 des Gehäuses 4 mit in das Gehäuse 4 hineinragenden Ansätzen 20 versehen, die nach innen in die Kammer 2 und 3 gerichtet sind und an deren Enden 18 der Rollbälge 13, 14 befestigt sind.

Neben den Arbeitskammern 2 und 3, welche überwiegend eine dämpfende Funktion ausüben, ist es günstig, wenn am Gehäuseboden 6 eine weitere Arbeitskammer 21 angebracht wird, die überwiegend eine Federfunktion übernimmt. Diese Luftfederkammer 21 wird von einem dritten Rollbalg 22 eingefasst, und dessen Rollfläche 23 wird durch den mit der Kolbenstange 11 verbundenen Rollkolben 24 gebildet. Dieser Rollkolben 24 hat in etwa den gleichen Aufbau wie eines der symmetrischen Teile des Kolbens 7. Auch ist die Ausbildung des Rollbalgs 22 und die Befestigung seiner Enden 23 und 24 am Boden 6 des Gehäuses 4 beziehungsweise am Kolben 24 in gleicher Weise wie bei der voranstehend geschilderten Ausbildung vorgenommen. Das Federungsverhalten der Luftfederkammer 21 kann durch die im Gehäuseboden 6 vorhandene Öffnung 26 gesteuert werden. Die Öffnung 26 stellt eine Verbindung der Luftfederkammer 21 zur benachbarten Arbeitskammer 3 her. Dadurch arbeitet die Anordnung als eine Dreiraum-Luftfeder mit den Arbeitskammern 2 und 3 und der Luftfederkammer 21.

## Patentansprüche

1. Luftfederdämpfer mit zwei durch einen Kolben getrennte Arbeitskammern, die über im Kolbenboden eingefügte Durchlassöffnungen miteinander kommunizieren, **dadurch gekennzeichnet, dass** der Kolben (7) in einem zylindrischen, durch Deckel (5) und Boden (6) abgeschlossenen Gehäuse (4), untergebracht ist und eine zylindrische Außenwandung (10) hat, die mit Abstand zur Innenwandung (12) des Gehäuses (4) angeordnet ist, und dass zwischen dem Kolben (7) und dem Gehäuse (4) zwei mit ihren Rollfalten (15, 16) entgegengerichtete Rollbälge (13, 14) eingefügt sind.

2. Luftfederdämpfer nach Anspruch 1, **dadurch gekennzeichnet, dass** die Kolbenstange (11) im Gehäuseboden (6) geführt ist.

3. Luftfederdämpfer nach Anspruch 1 oder 2, **dadurch gekennzeichnet, dass** die Außenwandung (10) des Kolbens (7) und die Innenwandung (12) des Gehäuses (4) die Abrollflächen für die Rollbälge (13, 14) bilden.

4. Luftfederdämpfer nach einem der Ansprüche 1 bis 3, **dadurch gekennzeichnet, dass** der Deckel (5) und/oder der Boden (6) des Gehäuses (4) mit konusförmigen, in das Gehäuse (4) hineinragenden Ansätzen (20) versehen ist beziehungsweise sind, an die die Arbeitskammern (2, 3) abdichtende Rollbälge (13, 14) angeschlossen sind.

5. Luftfederdämpfer nach einem der Ansprüche 1 bis 4, **dadurch gekennzeichnet, dass** die mit den entgegengerichteten Rollfalten (15, 16) versehenen Rollbälge (13, 14) einer gleichen Arbeitskammer (2, 3) aus einem Einzelstück bestehen.

6. Luftfederdämpfer nach einem der Ansprüche 1 bis 5, **dadurch gekennzeichnet, dass** an den Gehäuseboden (6) eine Luftfederkammer (21) angeschlossen ist.

7. Luftfederdämpfer nach einem der Ansprüche 1 bis 6, **dadurch gekennzeichnet, dass** die Luftfederkammer (21) von einem dritten Rollbalg (22) eingefasst ist, dessen Rollfläche (23) durch einen mit der Kolbenstange (11) verbundenen Rollkolben (24) gebildet ist.

8. Luftfederdämpfer nach Anspruch 1 bis 7, **dadurch gekennzeichnet, dass** im Gehäuseboden (6) wenigstens eine Öffnung (26) enthalten ist, die einen Luftaustausch zwischen der Arbeitskammer (3) und der Luftfederkammer (21) ermöglicht.

9. Luftfederdämpfer nach einem der Ansprüche 1 bis 8, **dadurch gekennzeichnet, dass** der Kolben (7) symmetrisch zum Kolbenboden (8) ausgebildet ist.
